# EUROPÄISCHE PATENTANMELDUNG

(11) **EP 3 360 913 A1**
(43) Veröffentlichungstag der Anmeldung: **15.08.2018**
(21) Anmeldenummer: 18000059.8
(22) Anmeldetag: 24.01.2018
(51) Int. Cl.: C08G 71/04, A61B 90/00

(54) **TEILKRISTALLINE ISOCYANATFREIE POLYHYDROXYURETHANE MIT THERMOMECHANISCH PROGRAMMIER- UND SCHALTBAREN EIGENSCHAFTEN**

(30) Priorität: 13.02.2017 DE 102017001393
(71) Anmelder: Baden-Württemberg Stiftung gGmbH, 70174 Stuttgart (DE)
(72) Erfinder: Schimpf, Vitalij, 79108 Freiburg (DE); Mülhaupt, Rolf, 79117 Freiburg (DE); MAX, Johannes, 75015 Bretten (DE)
(74) Vertreter: Müller-Boré & Partner Patentanwälte PartG mbB

(57) **Zusammenfassung**

Die vorliegende Erfindung betrifft eine Polymerzusammensetzung, umfassend ein lineares, verzweigtes und/oder vernetztes isocyanatfreies Polyhydroxyurethan mit teilkristallinen Eigenschaften, welches sich thermomechanisch programmieren und schalten lässt und auf einen externen Stimulus mit einer Formänderung reagiert. Ferner betrifft die vorliegende Erfindung ein die erfindungsgemäße Polymerzusammensetzung umfassendes Schichtsystem. Weiterhin betrifft die vorliegende Erfindung die Verwendung der erfindungsgemäßen Polymerzusammensetzung sowie die Verwendung des erfindungsgemäßen Schichtsystems.

## Beschreibung

Die vorliegende Erfindung betrifft eine Polymerzusammensetzung, umfassend ein lineares, verzweigtes und/oder vernetztes isocyanatfreies Polyhydroxyurethan mit teilkristallinen Eigenschaften, welches sich thermomechanisch programmieren und schalten lässt und auf einen externen Stimulus mit einer Formänderung reagiert. Ferner betrifft die vorliegende Erfindung ein die erfindungsgemäße Polymerzusammensetzung umfassendes Schichtsystem. Weiterhin betrifft die vorliegende Erfindung die Verwendung der erfindungsgemäßen Polymerzusammensetzung sowie die Verwendung des erfindungsgemäßen Schichtsystems.

Stimulus-responsive Polymere, welche auch als smarte Polymere bezeichnet werden, reagieren auf sich ändernde Umgebungseinflüsse mit einer Änderung ihrer Polymerstruktur. Als Stimuli kommen beispielsweise Änderungen der Temperatur, des Drucks, der Luftfeuchtigkeit, des pH-Werts, etc. in Frage.

Eine wichtige Klasse stimulus-responsiver Polymere sind sogenannte "Shape Memory"-Polymere, abgekürzt als SMPs (Angew. Chem. Int. Ed. 2002, 41, 2034-2057). "Shape Memory"-Polymere weisen gewissermaßen ein Formgedächtnis auf und können sich an ihre frühere Struktur trotz einer zwischenzeitlichen Umformung infolge des Stimulus erinnern.

Eine Vielzahl an "Shape Memory"-Polymeren ist thermoresponsiv, was das Vorhandensein eines oder mehrerer thermischer Übergänge voraussetzt. Typischerweise sind thermoresponsive SMPs teilkristallin, d.h. sie weisen neben einer Glasübergangstemperatur auch eine oder sogar mehrere Schmelztemperaturen für die teilkristallinen Bereiche auf, wobei sich all jene Übergänge eher in einem Temperaturbereich und nicht bei einer diskreten Temperatur vollziehen.

Sogenannte thermoresponsive "Triple Shape Memory"-Polymere (tSMPs) weisen üblicherweise zwei thermische Übergänge mit T₁ und T₂ (T₁ > T₂) oberhalb von Raumtemperatur auf, welche genutzt werden können, um zwei temporäre Formen F₁ und F₂ des Polymers zusätzlich zur ursprünglichen, permanenten Form Fₚ, wie sie bei der Herstellung des Polymers unmittelbar erhalten wird, thermomechanisch zu programmieren. Die Programmierung der ersten temporären Form F₁ erfolgt durch Verformung des Polymers ausgehend von seiner permanenten Form Fₚ bei einer Temperatur oberhalb von T₁. Anschließendes Abkühlen des so verformten Polymers auf eine Temperatur unterhalb von T₁ fixiert die erste temporäre Form F₁, beispielsweise durch Kristallisation. Entsprechend handelt es sich bei T₁ um die Schmelztemperatur. Bei einer Temperatur unterhalb von T₁, aber noch oberhalb von T₂ ist das Polymer immer noch flexibel. Verformung der ersten temporären Form F₁ und anschließendes Abkühlen auf eine Temperatur unterhalb von T₂ fixiert die zweite temporäre Form F₂, beispielsweise durch Glasumwandlung. Entsprechend handelt es sich bei T₂ um die Glasübergangstemperatur. Ausgehend von der zweiten temporären Form F₂, wie sie typischerweise bei Raumtemperatur vorliegt, kann nun durch Erwärmen zunächst in die erste temporäre Form F₁ oberhalb von T₂ und bei weiterem Erwärmen schließlich in die permanente Form Fₚ oberhalb von T₁ thermomechanisch geschaltet werden. Für die Restaurierung der permanenten Form Fₚ sind in Elastomeren und Duroplasten kovalente Vernetzungen verantwortlich, während nicht-kovalente Verschlaufungen, auch als Entanglements bezeichnet, in Thermoplasten für die Restaurierung der permanenten Form Fₚ sorgen (Progress in Polymer Science 2012, 37, 1720-1763).

Ferner kann bei "Shape Memory"-Polymeren mit linearen, teilkristallinen Segmenten im Polymerrückgrat durch kontrolliertes Abkühlen und Kristallisieren unter konstanter Last eine zusätzliche Dehnung induziert werden, welche in der Regel durch eine gerichtete Kristallisation der Polymerketten verursacht wird. Eine anschließende Temperaturerhöhung führt zu einem Aufschmelzen der Kristallite, wodurch es zu einer Kontraktion kommt. Die zuvor induzierte zusätzliche Dehnung kann auf diese Weise rückgängig gemacht werden. Im Stand der Technik ist dieses Phänomen als "Two-Way Reversible Shape Memory"-Effekt bekannt, womit das (thermisch) kontrollierte Schalten zwischen zwei Formen eines (polymeren) Werkstoffes gemeint ist (Macromolecules 2008, 41, 184-192; Smart Materials & Structures, 20, 065010).

Die im Stand der Technik beschriebenen "Shape Memory"-Polymere haben jedoch häufig den Nachteil, dass sie einer aufwendigen Synthese bedürfen oder auf zum Teil toxischen monomeren Vorläuferstufen beruhen. Entsprechend besteht ein hoher Bedarf an alternativen SMPs, welche die vorstehend genannten Nachteile nicht aufweisen.

Der vorliegenden Erfindung liegt somit die Aufgabe zugrunde, "Shape Memory"-Polymere bereitzustellen, die sich synthetisch vergleichsweise einfach und unbedenklich herstellen lassen sollen, ohne dabei Einbußen in Bezug auf die stimulusresponsiven Eigenschaften der SMPs hinnehmen zu müssen.

Diese Aufgabe wird durch die in den Ansprüchen gekennzeichneten Ausführungsformen der vorliegenden Erfindung gelöst.

Insbesondere wird erfindungsgemäß eine Polymerzusammensetzung bereitgestellt, umfassend ein lineares, verzweigtes und/oder vernetztes isocyanatfreies Polyhydroxyurethan mit teilkristallinen Eigenschaften, welches sich thermomechanisch programmieren und schalten lässt und auf einen externen Stimulus mit einer Formänderung reagiert, erhalten aus mindestens einem polyfunktionellen cyclischen Carbonat, dessen cyclische Carbonatgruppen fünf-, sechs-, sieben- und/oder achtgliedrig sind, als Komponente A1 und aus mindestens einem polyfunktionellen Amin als Komponente A2, wobei das mindestens eine polyfunktionelle cyclische Carbonat, das mindestens eine polyfunktionelle Amin und/oder die Kombination aus beiden hiervon kristallisationsfähig sind/ist und wobei das isocyanatfreie Polyhydroxyurethan folgende wiederkehrende Struktureinheit (A) aufweist:

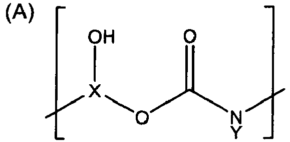

In der vorstehend dargestellten wiederkehrenden Struktureinheit (A) ist X ein linearer, verzweigter und/oder cyclischer, gesättigter oder ungesättigter, aliphatischer und/oder aromatischer, gegebenenfalls heteroatomhaltiger Kohlenwasserstoffrest mit mindestens zwei Kohlenstoffatomen und Y ist ein Wasserstoffatom oder eine Alkylgruppe, mit der Bedingung, dass sich die in der wiederkehrenden Struktureinheit (A) dargestellte Hydroxygruppe an einem Kohlenstoffatom in β-, γ-, δ- oder ε-Position in Bezug auf das Sauerstoffatom der Urethangruppe befindet.

Aufgrund der teilkristallinen Eigenschaften ist das in der erfindungsgemäßen Polymerzusammensetzung enthaltene isocyanatfreie Polyhydroxyurethan thermomechanisch programmier- und schaltbar sowie stimulus-responsiv, womit es den an ein "Shape Memory"-Polymer gestellten Anforderungen genügt. Ferner ist die erfindungsgemäße Polymerzusammensetzung ohne größeren apparativen Aufwand zugänglich. Insbesondere erfordert ihre Herstellung keine toxischen Isocyanate, wie sie bei der Synthese konventioneller Polyurethane zum Einsatz kommen. Vielmehr können die isocyanatfreien Polyhydroxyurethane der erfindungsgemäßen Polymerzusammensetzung aus bio-basierten Vorläuferstufen erhalten werden.

Wie vorstehend erwähnt, umfasst die erfindungsgemäße Polymerzusammensetzung ein lineares, verzweigtes und/oder vernetztes isocyanatfreies Polyhydroxyurethan mit teilkristallinen Eigenschaften. Gemäß der vorliegenden Erfindung wird dieses aus mindestens einem polyfunktionellen cyclischen Carbonat, dessen cyclische Carbonatgruppen fünf-, sechs-, sieben- und/oder achtgliedrig sind, als Komponente A1 und aus mindestens einem polyfunktionellen Amin als Komponente A2 erhalten.

Die teilkristalline Natur des isocyanatfreien Polyhydroxyurethans in der erfindungsgemäßen Polymerzusammensetzung, welche für die thermomechanische Programmier- und Schaltbarkeit eines "Shape Memory"-Polymers unerlässlich ist, beruht auf der Kristallisationsfähigkeit des mindestens einen polyfunktionellen cyclischen Carbonats und/oder des mindestens einen polyfunktionellen Amins, wobei sich die Kristallisationsfähigkeit auch durch ein Zusammenwirken dieser beiden Komponenten A1 und A2 ergeben kann. Bevor hierauf näher eingegangen wird, sollen zunächst die allgemeine Struktur der beiden Komponenten A1 und A2 sowie die allgemeine Struktur des daraus erhältlichen isocyanatfreien Polyhydroxyurethans näher beschrieben werden.

Durch Polyaddition des mindestens einen polyfunktionellen cyclischen Carbonats als Komponente A1 und des mindestens einen polyfunktionellen Amins als Komponente A2 lässt sich gemäß der vorliegenden Erfindung ein polymeres System auf Polyurethanbasis erhalten, wobei in jeder polymeren Wiederholungseinheit in der Nachbarschaft zum Sauerstoffatom der Urethangruppe eine Hydroxygruppe vorhanden ist. Die Hydroxygruppe einer jeden polymeren Wiederholungseinheit entsteht während der Polymerisation durch Ringöffnung einer cyclischen Carbonatgruppe beim nucleophilen Angriff einer Aminogruppe am Carbonyl-Kohlenstoffatom. Aus diesem Grund werden die aus den Komponenten A1 und A2 erhaltenen Polyurethane der erfindungsgemäßen Polymerzusammensetzung auch als Polyhydroxyurethane bezeichnet.

In diesem Zusammenhang ist unter dem Begriff "polyfunktionell" zu verstehen, dass die Anzahl polymerisierbarer funktioneller Gruppen, d.h. cyclischer Carbonatgruppen der Komponente A1 und Aminogruppen der Komponente A2, mindestens zwei beträgt. Sowohl die Komponente A1 als auch die Komponente A2 kann also di-, tri-, tetra-, penta-, hexafunktionell, etc. sein. Grundsätzlich unterliegt die Anzahl an polymerisierbaren funktionellen Gruppen sowohl bei der Komponente A1 als auch bei der Komponente A2 keinen weiteren Einschränkungen, solange das daraus erhältliche isocyanatfreie Polyhydroxyurethan teilkristalline Eigenschaften aufweist, wie weiter unten beschrieben.

Dem Fachmann ist bewusst, dass bei mehr als zwei polymerisierbaren funktionellen Gruppen in der Komponente A1 und/oder der Komponente A2 verzweigte isocyanatfreie Polyhydroxyurethane erhalten werden, wobei auch Vernetzungen möglich sind. Auf diese Weise sind Elastomere und Duroplaste zugänglich. Entsprechend handelt es sich in diesem Fall bei der erfindungsgemäßen Polymerzusammensetzung um ein Gießharzsystem. Weisen hingegen beide Komponenten A1 und A2 jeweils nur zwei polymerisierbare funktionelle Gruppen auf, werden bei deren Polyaddition lineare Polyhydroxyurethane gebildet. Auf diese Weise sind Thermoplaste zugänglich, weswegen die erfindungsgemäße Polymerzusammensetzung in diesem Fall auch als thermoplastisches System bezeichnet werden kann.

Die Komponente A1 ist gemäß der vorliegenden Erfindung nicht auf ein einziges polyfunktionelles cyclisches Carbonat beschränkt. Zur Bereitstellung der erfindungsgemäßen Polymerzusammensetzung können prinzipiell beliebig viele unterschiedliche Monomere als polyfunktionelles cyclisches Carbonat eingesetzt werden. Die Anzahl an polymerisierbaren funktionellen Gruppen der einzelnen Monomere kann dabei auch unterschiedlich sein. In gleicher Weise gilt dies auch für die Komponente A2, welche nicht auf ein einziges polyfunktionelles Amin beschränkt ist. Es können auch hier vielmehr verschiedene Monomere mit einer jeweils unterschiedlichen Anzahl an polymerisierbaren funktionellen Gruppen eingesetzt werden. Entsprechend kann es sich auch bei den aus den Komponenten A1 und A2 erhältlichen isocyanatfreien Polyhydroxyurethanen um ein Gemisch handeln.

Die Komponente A1, d.h. das mindestens eine polyfunktionelle cyclische Carbonat, lässt sich typischerweise durch die nachstehende allgemeine Formel (I) darstellen:

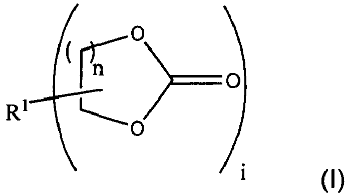

R¹ ist hierbei ein linearer, verzweigter und/oder cyclischer, gesättigter oder ungesättigter, aliphatischer und/oder aromatischer Kohlenwasserstoffrest, welcher Heteroatome enthalten kann. Bei den Heteroatomen kann es sich beispielsweise um Halogene, Schwefel, Stickstoff oder Sauerstoff handeln. Es können somit Imin-, Alkohol-, Ester-, Amid-, Harnstoff-, Thioether- und/oder Ethergruppen im Kohlenwasserstoffrest R¹ vorhanden sein. Der Index i, welcher die Anzahl an polymerisierbaren funktionellen Gruppen widerspiegelt, beträgt mindestens zwei. Vorzugsweise beträgt der Index i von 2 bis 6. Der Index n beeinflusst die Anzahl an Methylengruppen und damit die Ringgröße. Erfindungsgemäß nimmt n Werte von 1 bis 4 an, weswegen die cyclischen Carbonatgruppen fünf-, sechs-, sieben- und/oder achtgliedrig sein können. Vorzugsweise nimmt der Index n einen Wert von 1 an, wodurch fünfgliedrige cyclische Carbonatgruppen erhalten werden.

Polyfunktionelle cyclische Carbonate mit fünfgliedrigen cyclischen Carbonatgruppen lassen sich mit vergleichsweise geringem technischen Aufwand aus den analogen Epoxiden durch katalytische Kohlenstoffdioxidfixierung herstellen. Hierbei sind insbesondere glycidyletherbasierte Carbonate auf Basis von Polyolen, wie 1,4-Butandiol, Glycerin, Trimethylolpropan, Pentaerythrit, Sorbitol und weitere Zuckeralkohole zu nennen. In einer bevorzugten Ausführungsform der erfindungsgemäßen Polymerzusammensetzung ist das mindestens eine polyfunktionelle cyclische Carbonat glycidyletherbasiert und weist somit fünfgliedrige cyclische Carbonatgruppen auf. Die entsprechenden Vorläuferstufen, d.h. die Glycidylether, können beispielsweise durch Umsetzung der vorstehend genannten Polyole mit bio-basiertem Epichlorhydrin (E-picerol, Solvay) gewonnen werden, wobei im Anschluss an die Glycidylierung das cyclische Carbonat durch biologische oder chemische CO₂-Fixierung erhalten wird. Auf diese Weise lässt sich der Einsatz von nicht-erneuerbaren Rohstoffen nahezu gänzlich vermeiden.

Die Komponente A2, d.h. das mindestens eine polyfunktionelle Amin, lässt sich typischerweise durch die nachstehende allgemeine Formel (II) darstellen:

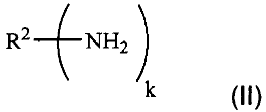

R² ist hierbei ein linearer, verzweigter und/oder cyclischer, gesättigter oder ungesättigter, aliphatischer und/oder aromatischer Kohlenwasserstoffrest, welcher Heteroatome enthalten kann. Bei den Heteroatomen kann es sich beispielsweise um Halogene, Stickstoff oder Sauerstoff handeln. Es können somit Imin-, sekundäre Amin-, tertiäre Amin-, Amid- und/oder Ethergruppen im Kohlenwasserstoffrest R² vorhanden sein. Die polyfunktionellen Amine können sich beispielsweise von Polyethylenglykol oder Polyethylenimin ableiten. Der Index k, welcher die Anzahl an polymerisierbaren funktionellen Gruppen widerspiegelt, beträgt mindestens zwei. Vorzugsweise beträgt der Index k von 2 bis 6. In der vorstehend dargestellten allgemeinen Formel (II) kann ein Wasserstoffatom der Aminogruppe auch durch eine Alkylgruppe substituiert sein, beispielsweise durch eine lineare C₁₋₆-Alkylgruppe. Die Komponente A2 ist folglich nicht auf primäre polyfunktionelle Amine beschränkt. Allerdings ist es gemäß der vorliegenden Erfindung bevorzugt, dass die Aminogruppen des mindestens einen polyfunktionellen Amins nicht weiter substituiert sind.

Bei den aus den Komponenten A1 und A2 erhältlichen Polyhydroxyurethanen handelt es sich demnach um isocyanatfrei hergestellte Polyurethane, sogenannte NIPUs (non-isocyanate polyurethanes), welche in der vorliegenden Anmeldung auch als isocyanatfreie Polyhydroxyurethane bezeichnet werden. Im Hinblick auf Nachhaltigkeit, Umweltschutz und Arbeitssicherheit gewinnt der Ersatz von konventionell hergestellten und zum Teil auf hochreaktiven Isocyanaten beruhenden Polyurethanen mehr und mehr an Bedeutung. Ein grundsätzlicher Nachteil von Isocyanaten liegt neben ihrer Synthese aus toxischem Phosgen im Allgemeinen in ihrer ausgeprägten Empfindlichkeit gegenüber Feuchtigkeit. Geringste Wasserspuren führen bereits zu einer Umsetzung der Isocyanate zu instabilen monosubsituierten Carbamidsäuren, welche sich in einer stark exothermen Reaktion unter Volumenzunahme durch Freisetzung von Kohlenstoffdioxid zersetzen. Damit einher geht auch das Auftreten von Blasenbildung innerhalb der Matrix des gebildeten Polyurethans durch den Einschluss des freigesetzten Kohlenstoffdioxids, was mitunter auch zu einem unerwünschten Aufschäumen des Polymers führt. Ein Verzicht auf feuchtigkeitsempfindliche Isocyanate bei der Bereitstellung der erfindungsgemäßen Polymerzusammensetzung ist daher vorteilhaft, da die anderen Komponenten der Polymerzusammensetzung somit keiner aufwendigen vorherigen Trocknung bedürfen. Neben einer erhöhten Arbeitssicherheit lassen sich hierdurch auch Zeit und Kosten einsparen. Nicht zuletzt sind auch die apparativen Anforderungen bei isocyanatfrei hergestellten Polyurethanen geringer.

Im Einklang mit den vorstehenden Definitionen der Komponenten A1 und A2 weist das isocyanatfreie Polyhydroxyurethan der erfindungsgemäßen Polymerzusammensetzung folgende wiederkehrende Struktureinheit (A) auf:

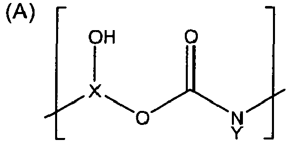

Entsprechend den jeweiligen Kohlenwasserstoffresten R¹ und R² in den allgemeinen Formeln (I) und (II) ist X ein linearer, verzweigter und/oder cyclischer, gesättigter oder ungesättigter, aliphatischer und/oder aromatischer, gegebenenfalls heteroatomhaltiger Kohlenwasserstoffrest mit mindestens zwei Kohlenstoffatomen. Y ist ein Wasserstoffatom oder eine Alkylgruppe, wobei in einer bevorzugten Ausführungsform Y ein Wasserstoffatom ist. Da die cyclischen Carbonatgruppen der Komponente A1 fünf-, sechs-, sieben- und/oder achtgliedrig sind, befindet sich die in der wiederkehrenden Struktureinheit (A) dargestellte Hydroxygruppe notwendigerweise an einem Kohlenstoffatom in β-, γ-, δ- oder ε-Position in Bezug auf das Sauerstoffatom der Urethangruppe.

Demnach handelt es sich bei der wiederkehrenden Struktureinheit (A), welche auch als Monomereinheit aufgefasst werden kann, nicht um eine Endgruppe, wie sie beispielsweise bei der Verknüpfung von Polyvinylalkohol mit Polyurethan zu Polyvinylalkohol-Polyurethan-Pfropfcopolymeren erhalten werden kann (Polym. Chem. 2016, 7, 6637-6644).

Wie vorstehend erwähnt, ist in einer bevorzugten Ausführungsform der erfindungsgemäßen Polymerzusammensetzung das mindestens eine polyfunktionelle cyclische Carbonat glycidyletherbasiert, weswegen die cyclischen Carbonatgruppen fünfgliedrig sind. In diesem Fall weist das isocyanatfreie Polyhydroxyurethan mindestens eine der beiden folgenden wiederkehrenden Struktureinheiten (B) und (C) auf, wobei Y vorzugsweise ein Wasserstoffatom ist:

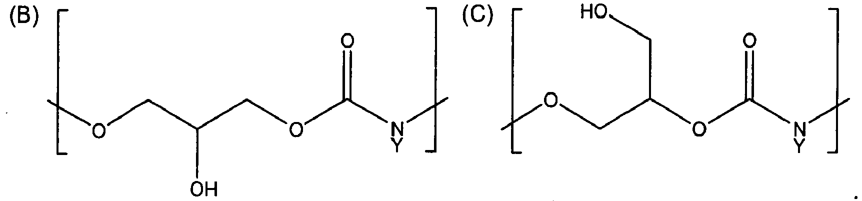

Unabhängig von der Position der Ringöffnung der cyclischen Carbonatgruppen befindet sich in den wiederkehrenden Struktureinheiten (B) und (C) die Hydroxygruppe in β-Position in Bezug auf das Sauerstoffatom der Urethangruppe. Die wiederkehrenden Struktureinheiten (B) und (C) sind genauso wie die wiederkehrende Struktureinheit (A) nicht als polymere Wiederholungseinheiten aufzufassen, die durch Aneinanderreihung das eigentliche isocyanatfreie Polyhydroxyurethan ergeben würden. Dies ist unmittelbar einleuchtend, da sich durch eine bloße Aneinanderreihung der wiederkehrenden Struktureinheiten keine verzweigten und/oder vernetzten Polymere darstellen ließen. Es handelt sich bei den hier dargestellten wiederkehrenden Struktureinheiten vielmehr um den charakteristischen Ausschnitt, welcher die Urethangruppe sowie ihre unmittelbare Umgebung erfasst, wobei der jeweilige charakteristische Ausschnitt sich im Polymer wiederfindet.

Die erfindungsgemäße Polymerzusammensetzung kann bei Bedarf noch weitere Additive, nachstehend auch als Komponente B zusammengefasst, umfassen, welche beispielsweise die mechanischen Eigenschaften, die Verarbeitbarkeit, die thermooxidative Stabilität, die Reaktionsgeschwindigkeit, den Lichtschutz, die Stabilität gegen Mikroben, etc. der Polymerzusammensetzung verbessern sollen.

In einer Ausführungsform der erfindungsgemäßen Polymerzusammensetzung ist die Komponente B mindestens ein Additiv, ausgewählt aus der Gruppe, bestehend aus Füllstoffen, Fasern, Weichmachern, Antioxidantien, Lichtschutzmitteln und Mikrobioziden. Dem Fachmann sind entsprechende Füllstoffe, Fasern, Weichmacher, Antioxidantien, Lichtschutzmittel und Mikrobiozide bekannt. Prinzipiell können hier als Additiv all jene Stoffe verwendet werden, wie sie allgemein in der Polymersynthese zum Einsatz kommen.

Um die thermooxidative Stabilität zu erhöhen, können der erfindungsgemäßen Polymerzusammensetzung Stabilisatoren zugesetzt werden, insbesondere sterisch gehinderte Phenole, wie z.B. Irganox 1010, Irganox 1076, Butylhydroxytoluol (BHT) und Vitamin E. Die Lichtschutzwirkung wird durch Zusatz von UV-Absorbern, wie z.B. Estern der Hydroxybenzoesäure oder Ruß, sowie durch Radikalfänger, wie z.B. sterisch gehinderte Amine, beispielsweise Derivate von Tetramethylpiperidin, gesteigert. Um die Verarbeitung zu verbessern, können beispielsweise Phosphite zugegeben werden. Es können auch Weichmacher wie Phthalsäureester als Additiv enthalten sein. Zur Verbesserung der mechanischen Eigenschaften können dem Fachmann bekannte Füllstoffe und Fasern als Additive zugesetzt werden, insbesondere Talk, Holzmehl, Schichtsilikate, Kohlenstoffmaterialien auf Basis von Graphen und Kurzglasfasern.

Beispielsweise kann es sich bei der Komponente B auch um einen Katalysator handeln, welcher die Reaktionsgeschwindigkeit der beiden Komponenten A1 und A2 erhöht. Für die erfindungsgemäße Zusammensetzung geeignete Katalysatoren sind typischerweise 1,4-Diazabicyclo[2.2.2]octan (DABCO), 1,8-Diazabicyclo[5.4.0]undec-7-en (DBU) und 1,5,7-Triazabicyclo[4.4.0]dec-5-en (TBD). Letzterer ist der im Stand der Technik empfohlene Katalysator, da er eine vergleichsweise hohe Aktivität aufweist. Weiterhin können als Katalysatoren auch Trimethylaminopropylethanolamin, Dimethylethanolamin, Dimethylaminocyclohexan sowie N-Methylmorpholin eingesetzt werden. Ferner kommen auch metallbasierte Katalysatoren in Frage, wie etwa Zinn(II)ethylhexanoat, Blei(II)ethylhexanoat, Dibutylzinndilaurat, Kaliumacetat, Kaliumethylhexanoat sowie Kombinationen hiervon.

Wie vorstehend erwähnt, lassen sich abhängig vom Funktionalisierungsgrad der beiden Komponenten A1 und A2 lineare, verzweigte und/oder vernetzte isocyanatfreie Polyhydroxyurethane erhalten, weswegen es sich bei der erfindungsgemäßen Polymerzusammensetzung entweder um ein Gießharzsystem oder um ein thermoplastisches System handelt. In einer bevorzugten Ausführungsform ist die erfindungsgemäße Polymerzusammensetzung bei einer Temperatur von weniger als 150 °C gießfähig und formbar. Dem Fachmann ist hierbei bewusst, dass durch die Auswahl der jeweiligen Monomere des mindestens einen polyfunktionellen cyclischen Carbonats und des mindestens einen polyfunktionellen Amins die Gießfähigkeit bzw. Formbarkeit der erfindungsgemäßen Polymerzusammensetzung beeinflusst werden kann.

Um ein isocyanatfreies Polyhydroxyurethan mit teilkristallinen Eigenschaften aus den Komponenten A1 und A2 zu erhalten, müssen/muss das mindestens eine polyfunktionelle cyclische Carbonat und/oder das mindestens eine polyfunktionelle Amin entsprechend modifiziert bzw. aufeinander abgestimmt sein. Erfindungsgemäß ist daher das mindestens eine polyfunktionelle cyclische Carbonat, das mindestens eine polyfunktionelle Amin und/oder die Kombination aus beiden hiervon kristallisationsfähig. Dies lässt sich auf vielfältige Weise erreichen, wie nachstehend beschrieben.

In einer Ausführungsform der erfindungsgemäßen Polymerzusammensetzung weist/weisen das mindestens eine polyfunktionelle cyclische Carbonat und/oder das mindestens eine polyfunktionelle Amin kristallisationsfähige Seitengruppen auf. Diese können innerhalb des Polymernetzwerkes Kristallite bilden und so dem Polyhydroxyurethan stimulus-responsive Eigenschaften verleihen.

Beispielsweise weist das mindestens eine polyfunktionelle Amin kristallisationsfähige Seitengruppen auf, wobei es sich bei den kristallisationsfähigen Seitengruppen vorzugsweise um Fettsäureseitenketten handelt. Erhalten werden die mit Fettsäureseitenketten funktionalisierten Amine aus den polyfunktionellen Aminen beispielsweise durch Amidierung mit Fettsäuren oder Fettsäureestern. Bevorzugte Fettsäuren sind Palmitin-, Stearin- und insbesondere Behensäure. Der Massenanteil der aus den Fettsäureseitenketten stammenden n-Alkylgruppen in Bezug auf die Gesamtmasse des funktionalisierten Amins liegt vorzugsweise im Bereich von 30 bis 50 Massen-%, ohne jedoch hierauf beschränkt zu sein. Polyfunktionelle Amine, welche sich besonders für die Funktionalisierung mit Fettsäureseitenketten eignen, sind beispielsweise verzweigte, mit Aminogruppen terminierte Polyethylenimine, wie z.B. Lupasol® (BASF).

Das so funktionalisierte Amin lässt sich allgemein durch die Formel (H₂N)_{f}-R³-(NH(CO)(CH₂)_{g}CH₃)ₕ beschreiben. Für R³ gelten die gleichen Definitionen, wie sie im Zusammenhang mit der vorstehenden allgemeinen Formel (II) für den Kohlenwasserstoffrest R² getroffen worden sind. Der Index f, welcher die Anzahl an polymerisierbaren funktionellen Gruppen widerspiegelt, beträgt mindestens zwei. Der Index h, welcher dem Funktionalisierungsgrad mit Fettsäureseitenketten entspricht, liegt typischerweise im Bereich von 1 bis 3. Der Index g entspricht der Anzahl an Methylengruppen in den jeweiligen Fettsäureseitenketten und beträgt mindestens 11, wobei er vorzugsweise Werte im Bereich von 14 bis 20 annimmt. Beispielsweise nimmt der Index g für Palmitinsäure einen Wert von 14 an, für Stearinsäure einen Wert von 16 und für Behensäure einen Wert von 20. In einer bevorzugten Ausführungsform ist das mindestens eine polyfunktionelle Amin ein verzweigtes, mit Aminogruppen terminiertes Polyethylenimin, welches durch Amidierung Fettsäureseitenketten mit Alkylresten, bestehend aus 15 bis 21 Kohlenstoffatomen, aufweist.

Alternativ kann auch das mindestens eine polyfunktionelle cyclische Carbonat mit kristallisationsfähigen Seitengruppen funktionalisiert sein, beispielsweise mit unpolaren aliphatischen Monoaminen. Entsprechend ist in diesem Fall der Kohlenwasserstoffrest R¹ in der vorstehend dargestellten allgemeinen Formel (I) mit kristallisationsfähigen Seitengruppen modifiziert.

Zusätzlich kann die erfindungsgemäße Polymerzusammensetzung in dieser Ausführungsform noch monofunktionelle Reaktivverdünner umfassen, welche die Netzwerkdichte verringern und so die Verarbeitung der Polymerzusammensetzung erleichtern. Bevorzugte Reaktivverdünner sind Propylen- und Ethylencarbonat, welche kommerziell erhältlich sind.

Nach Homogenisierung aller Komponenten oberhalb der Schmelztemperatur der kristallisationsfähigen Seitengruppen lässt sich die Polymerzusammensetzung beispielsweise in eine Gussform überführen und kann anschließend thermisch gehärtet werden. Hierdurch werden thermoresponsive Netzwerke aus isocyanatfreien Polyhydroxyurethanen mit kristallisationsfähigen Seitengruppen erhalten.

Die Kristallisationsfähigkeit der unpolaren Seitengruppen steigt in der Regel mit zunehmender Polarität der das Netzwerk bildenden isocyanatfreien Polyhydroxyurethane an. Auch nimmt die Kristallisationsfähigkeit mit abnehmender Netzwerkdichte zu. Durch Variation des Seitengruppenanteils, der Netzwerkdichte und der Härtungstemperatur, aber auch durch Tempern der erhaltenen teilkristallinen Polymernetzwerke können die Materialeigenschaften sowie die Mikro- und Nanostrukturbildung gesteuert werden. Bevorzugt liegt die Härtungstemperatur im Bereich der Kristallisationstemperatur der kristallisationsfähigen Seitengruppen. In diesem Fall laufen Vernetzung und Kristallitbildung bzw. -wachstum gleichzeitig ab und erzeugen dadurch besonders hochschmelzende Kristallite.

Die Kristallisation der Seitengruppen erzeugt thermoreversible Vernetzungsstellen im Polymernetzwerk, welche beim Überschreiten der Schmelztemperatur gelöst werden. Hierdurch kommt es zu einer Volumenzunahme, welche sich durch Abkühlen wieder rückgängig machen lässt. Liegt die Glasübergangstemperatur des Netzwerkes aus Polyhydroxyurethan ebenfalls oberhalb der Raumtemperatur, werden hierdurch "Triple Shape Memory"-Polymere erhalten, wobei sowohl durch die Kristallisation als auch durch die Verglasung jeweils eine temporäre Form neben einer durch das Netzwerk vorgegebenen, permanenten Form fixiert werden kann. Nach einer thermomechanischen Programmierung können so definierte Formänderungen durch thermomechanische Schaltung herbeigeführt werden.

In einer weiteren Ausführungsform der erfindungsgemäßen Polymerzusammensetzung werden durch die Kombination geeigneter Komponenten A1 und A2 Netzwerke aus isocyanatfreiem Polyhydroxyurethan mit linearen, kristallisationsfähigen Segmenten erhalten. Hierzu wird insbesondere ein difunktionelles cyclisches Carbonat mit einem difunktionellen Amin kombiniert, wobei durch die Anwesenheit einer weiteren Komponente mit mehr als zwei funktionellen Gruppen eine Vernetzung zu einem Polymernetzwerk mit linearen, kristallisationsfähigen Segmenten erfolgt.

Netzwerke aus isocyanatfreiem Polyhydroxyurethan mit linearen, kristallisationsfähigen Segmenten lassen sich beispielsweise durch Vernetzung von linearen, kristallisationsfähigen Polyhydroxyurethan-Präpolymeren mit einem polyfunktionellen cyclischen Carbonat erhalten. Durch Variation des Vernetzungs- und damit auch des Kristallisationsgrades können die Materialeigenschaften gezielt gesteuert werden. Dabei wird zunächst ein difunktionelles cyclisches Carbonat mit einem difunktionellen Amin umgesetzt, wodurch ein lineares, kristallisationsfähiges Präpolymer erhalten wird. Durch Zugabe eines polyfunktionellen cyclischen Carbonats, welches mehr als zwei cyclische Carbonatgruppen aufweist, erfolgt schließlich die Vernetzung des Präpolymers. Das allgemeine Reaktionsschema ist nachstehend dargestellt:

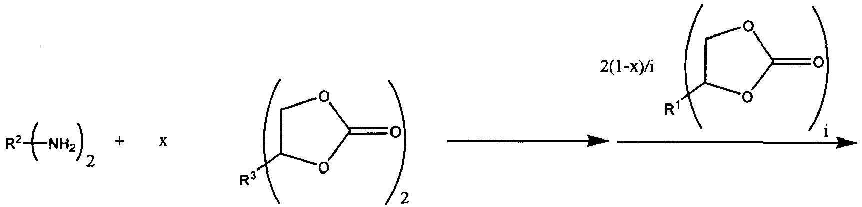

Für R¹ gelten hier die gleichen Definitionen, wie sie im Zusammenhang mit der vorstehenden allgemeinen Formel (I) getroffen worden sind. Der Index i ist hier größer als zwei, wobei Werte im Bereich von 3 bis 6 bevorzugt sind. R² ist hier notwendigerweise ein linearer Kohlenwasserstoffrest, beispielsweise (CH₂)ₘ oder (O)(CH₂)ₘ, wobei der Index m typischerweise Werte im Bereich von 8 bis 12 annimmt. R³ ist hier ebenfalls notwendigerweise linear, beispielsweise C₆H₁₂, CH₂O(CH₂)₄OCH₂, CH₂O(CH₂)₆OCH₂, CH₂OCH₂C(CH₃)₂CH₂OCH₂, CH₂OCH₂, vorzugsweise CH₂O(CH₂)₄OCH₂. x stellt das Stoffmengenverhältnis an eingesetztem difunktionellen cyclischen Carbonat in Bezug auf das eingesetzte difunktionelle Amin dar, wobei x einen Wert kleiner 1 annimmt. x nimmt hier beispielsweise Werte im Bereich von 0,70 bis 0,99 an, wobei Werte im Bereich von 0,80 bis 0,95 bevorzugt sind. So kann zum Beispiel ein Äquivalent des difunktionellen Amins mit 0,90 Äquivalenten des difunktionellen cyclischen Carbonats umgesetzt werden. Das so erhaltene lineare, teilkristalline Präpolymer wird anschließend mit 0,20/i Äquivalenten des polyfunktionellen cyclischen Carbonats umgesetzt, wodurch ein Netzwerk aus isocyanatfreiem Polyhydroxyurethan mit linearen, kristallisationsfähigen Segmenten, welche aus dem Präpolymer stammen, erhalten wird. Handelt es sich bei dem polyfunktionellen cyclischen Carbonat beispielsweise um ein tetrafunktionelles cyclisches Carbonat, werden 0,050 Äquivalente hiervon mit dem Präpolymer umgesetzt.

Als difunktionelles Amin werden besonders bevorzugt Diamine auf Polyetherbasis, wie z.B. Jeffamine® der D-Serie, und 1,12-Diaminododecan, verwendet. Unter den difunktionellen cyclischen Carbonaten werden bevorzugt 1,4-Butandioldiglycidylethercarbonat, Hexandioldiglycidylethercarbonat, Neopentyldioldiglycidylethercarbonat und Diglycidylethercarbonat verwendet, da diese mit 1,12-Diaminododecan bevorzugt lineare, kristallisationsfähige Segmente ausbilden. Das polyfunktionelle cyclische Carbonat, welches als Vernetzer des Präpolymers dient, ist nicht weiter eingeschränkt, solange es mindestens drei cyclische Carbonatgruppen aufweist.

Die Herstellung des Netzwerkes aus isocyanatfreiem Polyhydroxyurethan mit linearen, kristallisationsfähigen Segmenten kann lösungsmittelfrei über einen zweistufigen Prozess erfolgen, wobei zuerst das difunktionelle cyclische Carbonat und das difunktionelle Amin bei erhöhter Temperatur nicht-stöchiometrisch reagieren und das lineare Präpolymer bilden. Anschließend wird dieses in einem zweiten Schritt mit dem polyfunktionellen cyclischen Carbonat homogenisiert, in eine entsprechende Form gegossen und im Ofen ausgehärtet. Es ist grundsätzlich aber auch ein einstufiges "One Pot"-Verfahren möglich, wobei alle drei Komponenten direkt zusammengegeben und vernetzt werden.

Beim Abkühlen und bei der Kristallisation des so erhaltenen Netzwerkes unter konstanter Last können thermisch reversibel Verstreckungen, wie beispielsweise von bis zu 115 % der ursprünglichen Länge, induziert werden, wobei dies durch die gerichtete Kristallisation der linearen Segmente im Polymernetzwerk erklärt werden kann.

In einer anderen Ausführungsform der erfindungsgemäßen Polymerzusammensetzung dienen zwei unterschiedliche difunktionelle cyclische Carbonate oder zwei unterschiedliche difunktionelle Amine zur Herstellung von Blockcopolymeren mit linearen, kristallisationsfähigen Segmenten. Da jeder Block teilkristallin ist und einen eigenen Schmelzpunkt aufweist, handelt es sich bei den Blockcopolymeren um multikristalline Systeme. Jeder Block kann somit thermomechanisch individuell programmiert und geschaltet werden. Auch hier werden die teilkristallinen Eigenschaften durch das Zusammenwirken der beiden Komponenten A1 und A2 erhalten. Da hier ausschließlich difunktionelle cyclische Carbonate sowie difunktionelle Amine zum Einsatz kommen, handelt es sich bei den multikristallinen Blockcopolymeren naturgemäß um thermoplastische Systeme.

Thermoplastische, multikristalline Blockcopolymere aus isocyanatfreiem Polyhydroxyurethan können durch einen zweistufigen Polymerisationsprozess erhalten werden, wobei insgesamt entweder zwei verschiedene difunktionelle Amine zusammen mit einem difunktionellen cyclischen Carbonat oder zwei verschiedene difunktionelle cyclische Carbonate mit einem difunktionellen Amin umgesetzt werden. So kann das erste difunktionelle Amin (cyclische Carbonat) mit einem Überschuss des difunktionellen cyclischen Carbonats (Amins) bei erhöhter Temperatur homogenisiert und zu einem linearen, kristallisationsfähigen Präpolymer umgesetzt werden. Anschließend wird stöchiometrisch das zweite difunktionelle Amin (cyclische Carbonat) zusammen mit weiterem difunktionellem cyclischen Carbonat (Amin) als Kettenverlängerer zugegeben.

Thermoplastische, multikristalline Blockcopolymere aus isocanatfreiem Polyhydroxyurethan können jedoch auch in einem einstufigen "One Pot"-Verfahren erhalten werden, wobei auch hier entweder zwei verschiedene difunktionelle Amine zusammen mit einem difunktionellen cyclischen Carbonat oder umgekehrt eingesetzt werden. So können das erste difunktionelle Amin (cyclische Carbonat) und das zweite difunktionelle Amin (cyclische Carbonat) mit der stöchiometrischen Menge des difunktionellen cyclischen Carbonats (Amins) bei erhöhter Temperatur umgesetzt werden.

Als difunktionelles Amin werden auch hier bevorzugt Diamine auf Polyetherbasis, wie z.B. Jeffamine® der D-Serie, und 1,12-Diaminododecan verwendet. Bevorzugte difunktionelle cyclische Carbonate haben folgende Strukturmerkmale:

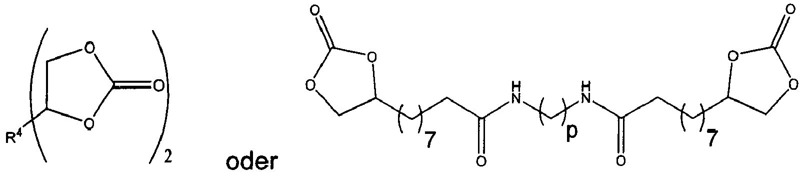

R⁴ ist ein linearer, eventuell heteroatomhaltiger Kohlenwasserstoffrest, bevorzugt C₆H₁₂, CH₂O(CH₂)₄OCH₂, CH₂O(CH₂)₆OCH₂, CH₂OCH₂C(CH₃)₂CH₂OCH₂, CH₂OCH₂, CH₂O(CH₂CH₂O)ₙCH₂ mit n > 6, wobei CH₂O(CH₂)₄OCH₂, CH₂OCH₂ und CH₂O(CH₂CH₂O)ₙCH₂ mit n > 6 besonders bevorzugt sind. Der Index p nimmt Werte im Bereich von 2 bis 12 an, wobei p bevorzugt 12 beträgt.

Wie vorstehend erwähnt, ist aufgrund der zwei unterschiedlichen linearen, kristallisationsfähigen Segmente das Blockcopolymer multikristallin, d.h. es weist neben der Glasübergangstemperatur zwei Schmelzpunkte auf. Diese können zusammen mit der Glasübergangstemperatur genutzt werden, um mehrere temporäre Formen thermomechanisch zu programmieren und zu schalten.

Multikristalline Systeme können auch durch Compoundieren eines Gemisches teilkristalliner Thermoplaste von unterschiedlichen isocyanatfreien Polyhydroxyurethanen erhalten werden. In diesem Zusammenhang spricht man auch von multikristallinen Blends. Die Auswahl der difunktionellen cyclischen Carbonate sowie der difunktionellen Amine erfolgt analog zur Auswahl für multikristalline Blockcopolymere. Es werden jedoch nur ein bestimmtes difunktionelles cyclisches Carbonat und ein bestimmtes difunktionelles Amin für das jeweilige isocyanatfreie Polyhydroxyurethan eingesetzt. Weiterhin können multikristalline Blends auch durch Compoundieren von teilkristallinen Thermoplasten aus isocyanatfreiem Polyhydroxyurethan mit teilkristallinen Polyethern, wie etwa Polyethylenglykol oder Polytetramethylenglykol, oder mit teilkristallinem Polycarpolacton erhalten werden.

Wie bei den multikristallinen Blockcopolymeren liegen auch bei den multikristallinen Blends verschiedenartige Kristallite vor, die bei unterschiedlichen Temperaturen schmelzen. Sie lassen sich demnach ebenfalls thermomechanisch programmieren und schalten. Neben den Schmelzpunkten der jeweiligen Kristallite können auch hier die Glasübergangstemperaturen zum Programmieren und Schalten der verschiedenen Formen genutzt werden.

Wie vorstehend ausgeführt, erlaubt die erfindungsgemäße Polymerzusammensetzung durch geeignete Wahl der Monomere des mindestens einen polyfunktionellen cyclischen Carbonats und des mindestens einen polyfunktionellen Amins das Bereitstellen von isocyanatfreien Polyhydroxyurethanen mit teilkristallinen Eigenschaften, wodurch diese Systeme stimulus-responsiv sind.

Wie vorstehend erwähnt, wird das isocyanatfreie Polyhydroxyurethan der erfindungsgemäßen Polymerzusammensetzung durch Polyaddition der beiden Komponenten A1 und A2 erhalten. Dabei reagieren das mindestens eine polyfunktionelle cyclische Carbonat und das mindestens eine polyfunktionelle Amin zu einem linearen, verzweigten und/oder vernetzten isocyanatfreien Polyhydroxyurethan mit teilkristallinen Eigenschaften.

Typischerweise liegen die zahlengemittelten Molmassen im Falle der thermoplastischen Systeme, d.h. der multikristallinen Blockcopolymere, in einem Bereich von 16 bis 20 kg/mol, ohne jedoch hierauf beschränkt zu sein. Die Bestimmung der Molmassen erfolgt hier mittels Gel-Permeations-Chromatographie (GPC) in DMAc, 0,5% LiBr, PMMA-Standard. Dem Fachmann ist klar, dass im Falle von vernetzten Polyhydroxyurethanen die Angabe von Molmassen naturgemäß wenig aussagekräftig ist.

Die Reaktionsbedingungen, insbesondere die Temperatur und die Härtungsdauer, hängen von den jeweiligen Komponenten A1 und A2 sowie von der Anwesenheit eines Katalysators ab. Beim polyfunktionellen Amin verändern insbesondere sterische sowie induktive Effekte die Reaktivität der Aminogruppen, was unterschiedliche Härtungsdauern bei einer bestimmten Temperatur zur Folge haben kann.

Die Formgebung der erfindungsgemäßen Polymerzusammensetzung erfolgt vorzugsweise durch Gießen, Spritzgießen, Extrusion, Coextrusion, Sprühen, Drucken, Beschichten oder additive Fertigung. Dem Fachmann ist hierbei bewusst, dass die Wahl der Formgebung nicht zuletzt davon abhängt, ob es sich bei der erfindungsgemäßen Polymerzusammensetzung um ein thermoplastisches System oder um ein Gießharzsystem handelt. Je nach System und Verwendungszweck wählt der Fachmann routinemäßig ein geeignetes Verfahren zur Formgebung aus.

Die erfindungsgemäße Polymerzusammensetzung ist nach der Polyaddition der beiden Komponenten A1 und A2 direkt gebrauchsfertig. Lösungsmittel und spezielle Verarbeitungsbedingungen, wie etwa der Ausschluss von Luftfeuchtigkeit oder zusätzliches Vortrocknen, sind im Gegensatz zu Polyurethanen auf Isocyanatbasis nicht erforderlich. Somit lässt sich die erfindungsgemäße Polymerzusammensetzung ohne weitere Bearbeitung nach der Herstellung als "Shape Memory"-Polymer verwenden.

Die in der erfindungsgemäßen Polymerzusammensetzung enthaltenen isocyanatfreien Polyhydroxyurethane lassen sich aufgrund ihrer teilkristallinen Eigenschaften thermomechanisch programmieren und schalten. Auf einen externen Stimulus können sie mit einer Formänderung reagieren. Bei dem externen Stimulus handelt es sich typischerweise um eine Temperaturänderung, wobei die vorliegende Erfindung nicht notwendigerweise hierauf beschränkt ist. Beispielsweise können die isocyanatfreien Polyhydroxyurethane der erfindungsgemäßen Polymerzusammensetzung auch auf eine Änderung der Feuchtigkeit, etwa der Luftfeuchtigkeit, mit einer Formänderung reagieren. Wird der externe Stimulus entfernt, kann das teilkristalline Polyhydroxyurethan wieder in seine ursprüngliche Form zurückkehren. Die durch den externen Stimulus in den isocyanatfreien teilkristallinen Polyhydroxyurethanen induzierte Formänderung kann ferner reversibel sein, wie vorstehend im Zusammenhang mit den Netzwerken aus isocyanatfreiem Polyhydroxyurethan mit linearen, kristallisationsfähigen Segmenten beschrieben.

In einem weiteren Aspekt betrifft die vorliegende Erfindung ein Schichtsystem, welches mindestens eine Schicht, bestehend aus der erfindungsgemäßen Polymerzusammensetzung, umfasst, sowie mindestens eine weitere Schicht, welche sich nicht thermomechanisch programmieren und schalten lässt und nicht auf einen externen Stimulus mit einer Formänderung reagiert.

In den erfindungsgemäßen Schichtsystemen lassen sich durch einen externen Stimulus Formänderungen induzieren, wobei Schichten mit unterschiedlichem Ausdehnungsverhalten miteinander kombiniert werden.

In einer Ausführungsform des erfindungsgemäßen Schichtsystems besteht eine Schicht aus einem Netzwerk aus isocyanatfreiem Polyhydroxyurethan mit kristallisationsfähigen Seitengruppen, wie vorstehend beschrieben. Im Bereich der Schmelztemperatur zeigt dieses System in der Regel einen signifikanten Anstieg des Ausdehnungskoeffizienten, welcher durch den erhöhten Platzbedarf der geschmolzenen Seitengruppen im Vergleich zur dichten Packung der Seitengruppenkristallite zurückzuführen ist.

Solche thermoresponsiven Zweischichtsysteme lassen sich über eine kovalente Verknüpfung einer teilkristallinen Polyhydroxyurethanschicht mit einer amorphen Polyhydroxyurethanschicht erhalten. Als teilkristallines Netzwerk aus Polyhydroxyurethan werden bevorzugt Polyhydroxyurethane mit Schmelzenthalpien von mehr als 15 J/g eingesetzt. Eine solche Untergrenze ist bevorzugt, da die Volumenausdehnung der teilkristallinen Polyhydroxyurethanschicht mit der Menge an Kristalliten und folglich auch mit der Schmelzenthalpie korreliert. Mit eine Zunahme der Schmelzenthalpie nimmt auch die Differenz in der Volumenausdehnung der beiden Schichten beim Erwärmen zu, was wiederum das Ausmaß der thermisch induzierten Formänderung vergrößert.

Die amorphe Schicht aus Polyhydroxyurethan wird beispielsweise durch Polyaddition von polyfunktionellen cyclischen Carbonaten mit polyfunktionellen Aminen erhalten, wobei aufgrund ihrer kommerziellen Verfügbarkeit beispielsweise difunktionelle lineare Amine mit 2 bis 12, vorzugsweise mit 5 bis 6 Methyleneinheiten eingesetzt werden. Grundsätzlich wird eine amorphe Morphologie durch Vernetzung begünstigt, da diese die Ausbildung von Kristalliten unterbindet. Das amorphe Polyhydroxyurethan sollte ferner einen Glasübergang im Bereich der Kristallisationstemperatur des teilkristallinen Polyhydroxyurethans aufweisen, vorzugsweise darunter. Anderenfalls kann es zu mechanischen Spannungen im amorphen Polyhydroxyurethan beim Induzieren der Formänderung im teilkristallinen Polyhydroxyurethan kommen, wobei aufgrund der Verglasung der amorphen Polyhydroxyurethanschicht die Formänderung der teilkristallinen Polyhydroxyurethanschicht und damit auch die Formänderung des gesamten Zweischichtsystems mitunter ausbleiben können.

Allgemein lassen sich die vorstehend beschriebenen thermoresponsiven Zweischichtsysteme erhalten, indem eine auf einer Oberfläche verteilte Polymerzusammensetzung für das teilkristalline Polyhydroxyurethan vor der vollständigen Aushärtung mit einer Polymerzusammensetzung für das amorphe Polyhydroxyurethan überschichtet wird. Nach anschließender thermischer Härtung wird das kovalent verbundene Zweischichtsystem erhalten. Beim Abkühlen des Zweischichtsystems zeigt die teilkristalline Schicht aus Polyhydroxyurethan in der Regel eine ausgeprägte Kontraktion aufgrund der dichten Packung der kristallisationsfähigen Seitengruppen zu den Kristalliten, was eine Biegung des Zweischichtsystems bewirkt. Diese Biegung ist durch das Schmelzen der Kristallite in der teilkristallinen Polyhydroxyurethanschicht thermisch reversibel, weil hierdurch der Platzbedarf der kristallisationsfähigen Seitengruppen wieder erhöht wird. Das Zweischichtsystem kehrt so in seine Ausgangsform zurück.

In einer anderen Ausführungsform des erfindungsgemäßen Schichtsystems wird die Formänderung durch Wasseraufnahme induziert. Kovalent verbundene Mehrschichtsysteme aus einer hydrophilen und einer hydrophoben Polyhydroxyurethanschicht können eine definierte Formänderung durch unterschiedliche Wasseraufnahmefähigkeit der jeweiligen Schichten zeigen. Als Monomer für Schichten aus Polyhydroxyurethan mit hoher Wasseraufnahmefähigkeit werden polare polyfunktionelle cyclische Carbonate und Amine verwendet. Mindestens eine der beiden Komponenten besitzt polare Einheiten, wie etwa Ether-, Alkohol- oder Aminogruppen. Bevorzugte polyfunktionelle cyclische Carbonate für die hydrophile Schicht aus Polyhydroxyurethan sind durch die nachstehende Formel gekennzeichnet:

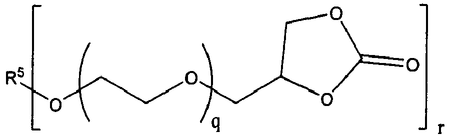

Für R⁵ gelten hier die gleichen Definitionen, wie sie im Zusammenhang mit der vorstehenden allgemeinen Formel (I) für den Kohlenstoffrest R¹ getroffen worden sind. Der Index q ist mindestens 1 und bevorzugt größer 6. Der Index r nimmt Werte im Bereich von 2 bis 6 an. Er ist vorzugsweise 3 oder 4.

Bevorzugte polyfunktionelle Amine dieser Ausführungsform besitzen die Struktur R⁶[R⁷NH₂]₂ mit R⁶ = O[(CH₂)ₛO]ₜ, s = 2 bis 4 und t ≥ 1. Für R⁷ gelten hier die gleichen Definitionen, wie sie im Zusammenhang mit der vorstehenden allgemeinen Formel (II) für den Kohlenstoffrest R² getroffen worden sind. Insbesondere kann R⁷ auch die Einheit -NHCH₂CH₂- aufweisen.

Als Komponenten für eine Schicht aus Polyhydroxyurethan mit einer geringen Wasseraufnahmefähigkeit werden unpolare polyfunktionelle cyclische Carbonate und Amine verwendet. Mindestens eine der beiden Komponenten besitzt unpolare Alkylsegmente im Rückgrat, bevorzugt Polycarbonate auf Basis von Pflanzenölen, und fettsäurebasierte Amine, beispielsweise aus der Priamine™-Reihe (Croda).

Der kovalente Verbund zweier Schichten aus polarem und unpolarem Polyhydroxyurethan mit hoher bzw. geringer Wasseraufnahmefähigkeit resultiert in einer definierten Formänderung im Falle einer Wasserzufuhr. Durch Verdunsten bei Raumtemperatur kann die Formänderung wieder rückgängig gemacht werden.

Mittels additiver Fertigung (3D-/4D-Druck) als formgebendes Verfahren können durch gezielte Variation von kovalent verbundenen polaren und unpolaren Bereichen aus Polyhydroxyurethan verschiedene Verformungsmechanismen, wie z.B. Aufrollen, Wellen oder Schraubenbewegung, erzeugt werden.

In einem weiteren Aspekt betrifft die vorliegende Erfindung die Verwendung der erfindungsgemäßen Polymerzusammensetzung und des erfindungsgemäßen Schichtsystems als Formkörper, Beschichtung, Faser, Folie, Aktuator oder Bauteil für die Medizintechnik. Grundsätzlich können die erfindungsgemäße Polymerzusammensetzung sowie das daraus gebildete Schichtsystem überall dort zum Einsatz kommen, wo stimulus-responsive Polymere vorteilhaft sind.

Die vorliegende Erfindung erlaubt das Bereitstellen von "Shape Memory"-Polymeren aus isocyanatfreien Polyhydroxyurethanen mit teilkristallinen Eigenschaften unter Verwendung polyfunktioneller cyclischer Carbonate und polyfunktioneller Amine ohne toxische Ausgangs- und Zwischenverbindungen. Ferner ist mit der vorliegenden Erfindung die Nutzung erneuerbarer Ressourcen durch kombinierte chemische und biologische CO₂-Fixierung möglich. Es können sogar vollständig biobasierte teilkristalline Polyhydroxyurethane erhalten werden, welche über stimulus-responsive Eigenschaften verfügen.

Gemäß der vorliegenden Erfindung ist es nicht erforderlich die Komponenten der Polymerzusammensetzung zu trocknen, da die hier eingesetzten polyfunktionellen cyclischen Carbonate nicht feuchtigkeitsempfindlich sind. Dies ist ein entscheidender Vorteil gegenüber konventionell hergestellten Polyurethanen, deren Synthese nur unter Wasserausschluss möglich ist. Auch ist hierdurch die Herstellung von "Shape Memory-Polymeren" mit vergleichsweise geringem apparativem Aufwand möglich.

Die Figuren zeigen:
Fig. 1 zeigt die Aufheiz- und Abkühlkurven der teilkristallinen Netzwerke P1 und P2 aus Beispiel 1.
Fig. 2 zeigt das Profil des Speichermoduls in Abhängigkeit der Temperatur für das teilkristalline Netzwerk P2 aus Beispiel 1.
Fig. 3 zeigt das "Triple Shape Memory"-Verhalten des teilkristallinen Netzwerkes P2 aus Beispiel 1.
Fig. 4 zeigt die Aufheizkurve der Folie aus Beispiel 2.
Fig. 5 zeigt die dynamisch-mechanische Analyse des Dehnungsverhaltens der Folie aus Beispiel 2.
Fig. 6 zeigt die thermisch-mechanische Analyse des Dehnungsverhaltens des Zweischichtsystems aus Beispiel 3.
Fig. 7 zeigt die reversible Verformung des Zweischichtsystems aus Beispiel 3.
Fig. 8 zeigt den "Shape Memory"-Zyklus der Folie aus Beispiel 4.
Fig. 9 zeigt den "Shape Memory"-Zyklus des Gemisches teilkristalliner Homopolymere aus Beispiel 5.
Fig. 10 zeigt eine schematische Darstellung der Vorlage zur Herstellung des Mehrschichtsystems aus Beispiel 6.
Fig. 11 zeigt die reversible Verformung des Mehrschichtsystems aus Beispiel 6.

### Beispiele

Die nachstehenden Beispiele dienen der weiteren Erläuterung der vorliegenden Erfindung, ohne jedoch hierauf beschränkt zu sein.

### Beispiel 1

Polyfunktionelles Polyethylenimin (PEI, Lupasol® FG, BASF, 800 g/mol, 43,98 g, 54,98 mmol) wurde mit Behensäure (technisch, > 85 %, 29,47 g, 86,53 mmol) in Substanz (170 °C, 7,5 Stunden, Stickstoffatmosphäre) über eine teilweise Amidierung der primären Aminogruppen zum kristallisationsfähigen polyfunktionellen Amin A mit Fettsäuregruppen umgesetzt. Kalorimetrische Untersuchungen zeigten einen breiten Schmelzbereich, der auf das Schmelzen der Fettsäureseitenketten zurückzuführen war (Tₖᵣᵢₛₜ = 57 °C, Tm = 63 °C, ΔHm = 47 J/g). ¹H- und ¹³C-NMR-Analytik ergaben einen durchschnittlichen Amidierungsgrad von 1,9 Fettsäureseitenketten pro PEI-Molekül und einen Fettsäureanteil von 43 Massen-%.

Das polyfunktionelle cyclische Carbonat B wurde über die chemische Fixierung von Kohlenstoffdioxid an Pentaerythritglycidylether mit Tetrabutylammoniumbromid (2 Massen-%) als Katalysator im Edelstahlreaktor erhalten (30 bar CO₂, 96 Stunden, 135 °C) und das erhaltene Produkt wurde ohne weitere Aufreinigung verwendet.

Propylencarbonat C wurde kommerziell erworben und diente als Reaktivverdünner zur Gelzeiterhöhung, Viskositätserniedrigung sowie *in situ*-Funktionalitätssteuerung des polyfunktionellen Amins A.

Die Komponenten A, B und C sind nachstehend mit ihren Strukturformeln dargestellt:

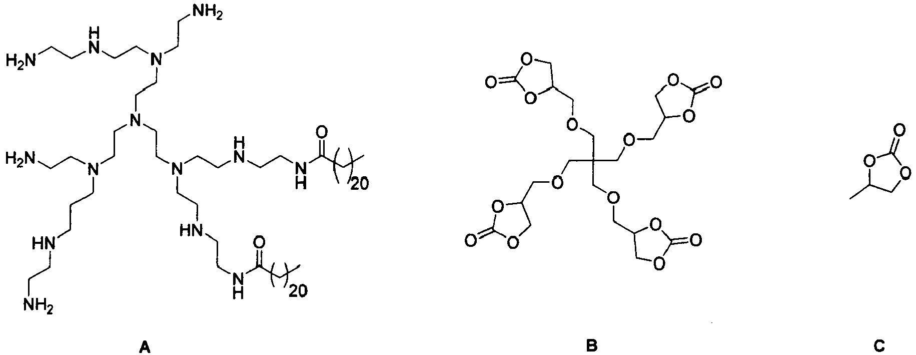

Es wurde ein homogenes Gemisch BC aus B (10,64 g, 51,1 mmol "CO₃") und C (5,70 g, 55,9 mmol "CO₃") dargestellt.

Das Carbonatgemisch BC (1,85 g, 12,1 mmol "CO₃") wurde mit dem kristallisationsfähigen Amin A (2,73, 12,0 mmol "NH₂") in einem Becherglas bei 90 °C homogenisiert und anschließend in eine temperierte Gussform gegossen. Die Härtung wurde für eine Dauer von zehn Stunden bei 80 °C im Ofen durchgeführt und ergab ein teilkristallines Netzwerk P1 mit 26 Massen-% Fettsäurerest.

Darüber hinaus wurde das Carbonatgemisch BC (5,38 g, 35,2 mmol "CO₃") mit dem kristallisationsfähigen polyfunktionellen Amin A (7,92, 34,9 mmol "NH₂") in einem Becherglas bei 90 °C homogenisiert und anschließend auf eine temperierte, 90 °C heiße Glasplatte gegossen. Mittels einer Rakel wurde ein 1 mm dicker Film des Reaktionsgemisches auf der Glasplatte erzeugt. Anschließend wurde die Härtung für eine Dauer von zehn Stunden bei 50 °C und für eine Dauer von einer Stunde bei 100 °C im Ofen durchgeführt. Es wurde ein teilkristallines Netzwerk P2 mit 26 Massen-% Fettsäurerest erhalten.

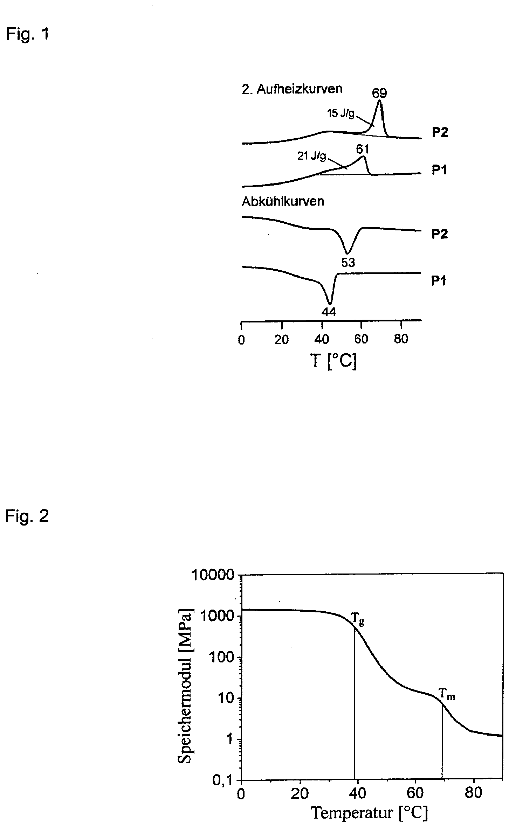

Das teilkristalline Netzwerk P1 mit einer Härtungstemperatur oberhalb der Schmelztemperatur der Fettsäureseitenketten zeigte einen breiten Schmelzbereich, der im Thermogramm nahezu mit der Glasübergangstemperatur zwischen 30 und 40 °C verlief (Fig. 1 oben).

Im teilkristallinen Netzwerk P2 erfolgte hingegen durch Herabsenken der Härtungstemperatur auf 50 °C die Vernetzungsreaktion in Konkurrenz zur Kristallisation. Hierdurch wurden verhältnismäßig hochschmelzende Kristallite und ein diskreterer Schmelzbereich erhalten, welcher sich scharf von der Glasübergangstemperatur abgrenzte (Fig. 1 unten).

Die dynamisch-mechanische Analyse (3 K/min, 1 Hz, 1 %, dual cantilever) des teilkristallinen Netzwerkes P2 zeigte drei Plateaus und zwei Wendepunkte im Profil des Speichermoduls in Abhängigkeit der Temperatur. Das Profil war auf die Glasübergangstemperatur der Matrix (38 °C) sowie auf die Schmelztemperatur der Fettsäureseitenketten (69 °C) zurückzuführen, welche beide oberhalb von Raumtemperatur lagen (Fig. 2).

In das teilkristalline Netzwerk P2 ließen sich zwei temporäre Formen neben der permanenten Form thermomechanisch einprogrammieren und temperaturkontrolliert ändern. Oberhalb einer Temperatur von 80 °C wurde dazu das Material des teilkristallinen Netzwerkes P2 in die erste temporäre Form gebracht und durch Kristallisation der Fettsäureseitenketten fixiert. Oberhalb der Glasübergangstemperatur war das Material weiterhin flexibel und ließ sich in die zweite temporäre Form überführen, bevor diese durch Abkühlen und Verglasung der Polyhydroxyurethanmatrix fixiert wurde.

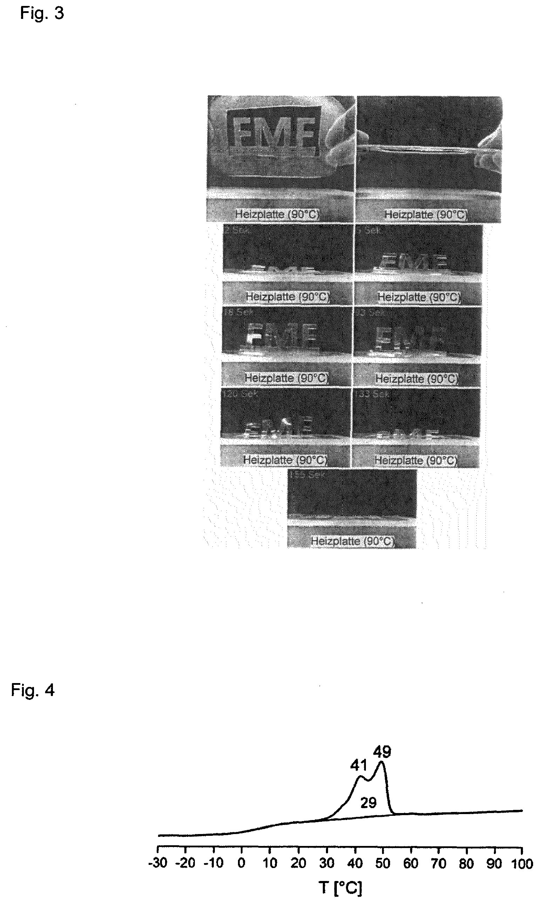

Das auf diese Weise thermomechanisch programmierte Material des teilkristallinen Netzwerkes P2 wurde anschließend langsam auf der 90 °C heißen Platte erwärmt. Beim Passieren der Glasübergangstemperatur (38 °C) wurde die erste Formänderung induziert. Dabei ging die zweite temporäre Form in die erste temporäre Form über, welche durch die Seitenkettenkristallite fixiert wurde. Sobald diese aufschmolzen (69 °C), ging das Material in seine permanente Form über, in der das Material vernetzt worden war (Fig. 3).

### Beispiel 2

1,4-Butandioldiglycidylethercarbonat (BDGC, 3,044 g, 20,98 mmol "CO₃") und 1,12-Diaminododecan (DAD, 2,336 g, 23,32 mmol "NH₂") wurden in einem Becherglas bei 100 °C mit einem Spatel 15 Minuten lang gerührt. Anschließend wurde Pentaerythritglycidylethercarbonat (PGC, 0,473 g, 2,32 mmol "CO₃") zugegeben. Das Reaktionsgemisch wurde eine Minute lang homogenisiert und anschließend auf eine temperierte, 80 °C heiße Teflonplatte gegossen, wobei eine Schichtdicke von 0,5 mm mit einer Rakel eingestellt wurde. Das Material kühlte auf Raumtemperatur ab. Anschließend wurde die Härtung im Ofen durchgeführt (16 Stunden: 50 °C; 24 Stunden: 70 °C; zwei Stunden: 100 °C).

Das Reaktionsschema ist nachstehend dargestellt:

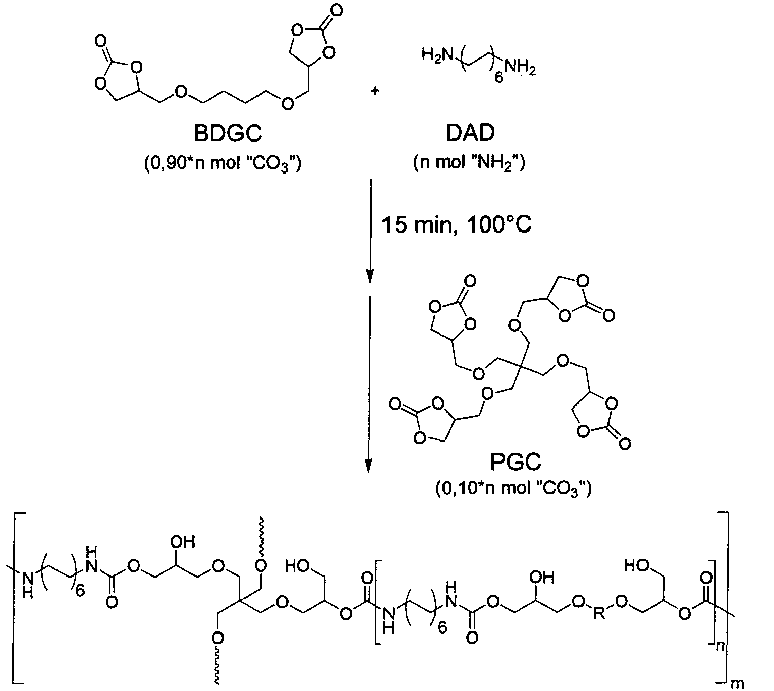

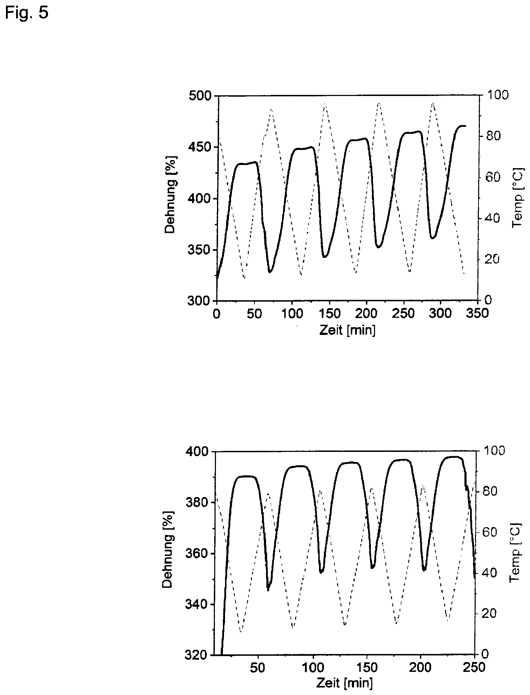

Die erhaltene, farblose Folie wurde anschließend an der DMA vermessen und zeigte ein "Two-Way Reversible Shape Memory"-Verhalten unter konstanter Last. Gerichtete Kristallisation der linearen, kristallisationsfähigen Polyhydroxyurethansegmente erzeugte beim Abkühlen eine kristallisationsinduzierte Verstreckung von bis zu 115 % der Ausgangslänge, welche beim Aufheizen durch Schmelzen der Kristallite wieder rückgängig gemacht werden konnte. Nach Abkühlen (DSC, 10 K/min) auf Raumtemperatur und Aufbewahren für eine Dauer von 24 Stunden zeigte die erhaltene, farblose Folie einen breiten Schmelzbereich zwischen 30 und 55 °C (DSC, erste Aufheizkurve, 10 K/min) (Fig. 4). Die dynamisch-mechanische Analyse des Dehnungsverhaltens zeigte einen periodischen Verlauf (Filmklemme, 3 K/min, 10 bis 95 °C; Filmklemme, 3 K/min, 10 bis 80 °C) (Fig. 5 oben und unten).

### Beispiel 3

Es wurde ein kovalent verbundenes Zweischichtsystem aus einem amorphen Netzwerk P3 (Schicht 1), welches aus Pentaerythritglycidylethercarbonat (PGC) und 1,5-Diaminopentan (DAP) erhalten wurde, und dem teilkristallinen Netzwerk P2 aus Beispiel 1 (Schicht 2) angefertigt.

Pentaerythritglycidylethercarbonat (PGC, 2,823 g, 13,83 mmol "CO₃") und 1,5-Diaminopentan (DAP, 0,706 g, 13,82 mmol "NH₂") wurden innerhalb einer Minute bei 50 °C in einem Becherglas homogenisiert und anschließend auf eine 70 °C heiße Teflonplatte gegossen. Mit einer Rakel wurde ein ca. 0,7 mm dünner Film erzeugt. Nach einer Dauer von zehn Minuten wurde das fertige Reaktionsgemisch für das teilkristalline Netzwerk P2 neben den Film gegossen und mit einer Rakel und einem Spaltabstand von 1,5 mm gleichmäßig über die erste Schicht verteilt. Die Härtung erfolgte anschließend im Ofen bei 100 °C für eine Dauer von vier Stunden.

Das Reaktionsgemisch für das teilkristalline Netzwerk P2 wurde durch Vermischen des Carbonatgemisches BC (aus Beispiel 1: 1,973 g, 12,92 mmol "CO₃") mit dem kristallisationsfähigen polyfunktionellen Amin A (aus Beispiel 1: 2,946 g, 12,95 mmol "NH₂") bei 90 °C in einem Becherglas erhalten.

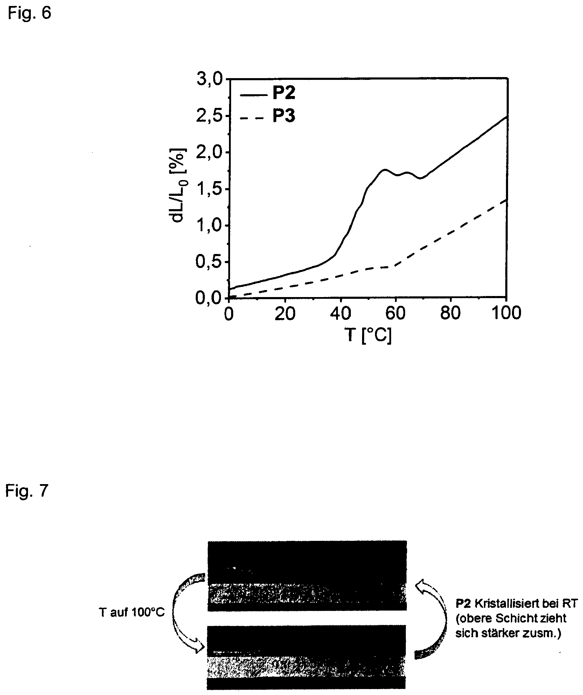

Weiterhin wurden zylinderförmige, planparallele Prüfkörper für die Messung der thermischen Expansion mittels thermisch-mechanischer Analyse (5 K/min) angefertigt. Das teilkristalline Netzwerk P2 zeigte, im Gegensatz zum amorphen Netzwerk P3, einen signifikanten Anstieg der Expansion im Bereich um die Schmelztemperatur zwischen 40 und 70 °C (Fig. 6).

Das Zweischichtsystem zeigte nach dem Härten beim Abkühlen auf Raumtemperatur eine Biegung, welche durch Aufheizen über den Schmelzbereich der Schicht mit dem teilkristallinen Netzwerk P2 (Schicht 2) wieder rückgängig gemacht werden konnte (Fig. 7).

### Beispiel 4

PolyTHF Amin (Jeffamine® THF-170, Huntsman, 11,426 g, 13,94 mmol "NH₂") wurde zusammen mit Diglycidylethercarbonat (DGC, 4,692 g, 43,01 mmol "CO₃") und 1,12-Diaminododecan (2,913 g, 29,08 mmol "NH₂") bei 100 °C für eine Dauer von zehn Minuten homogenisiert, anschließend in einen Doppelschnecken-Compounder überführt und mit 120 RPM für eine Dauer von 15 Minuten bei 100 °C, für eine Dauer von 15 Minuten bei 110 °C, für eine Dauer von 15 Minuten bei 120 °C und für eine Dauer von 125 Minuten bei 130 °C unter Stickstoffatmosphäre durchmischt. Aus der Polymerschmelze wurde anschließend eine Folie durch Spritzgießen hergestellt. Folgende Materialeigenschaften wurden bestimmt:
Mₙ = 18,1 kg/mol, Mw = 43,9 kg/mol, PDI = 2,4 (GPC; DMAc, PMMA Standard);
Tₘ₁ = 15 °C; ΔHₘ₁ = 12 J/g; Tm2 = 80 °C; ΔHₘ₂ = 7 J/g (DSC, zweite Aufheizkurve, 10 K/min).

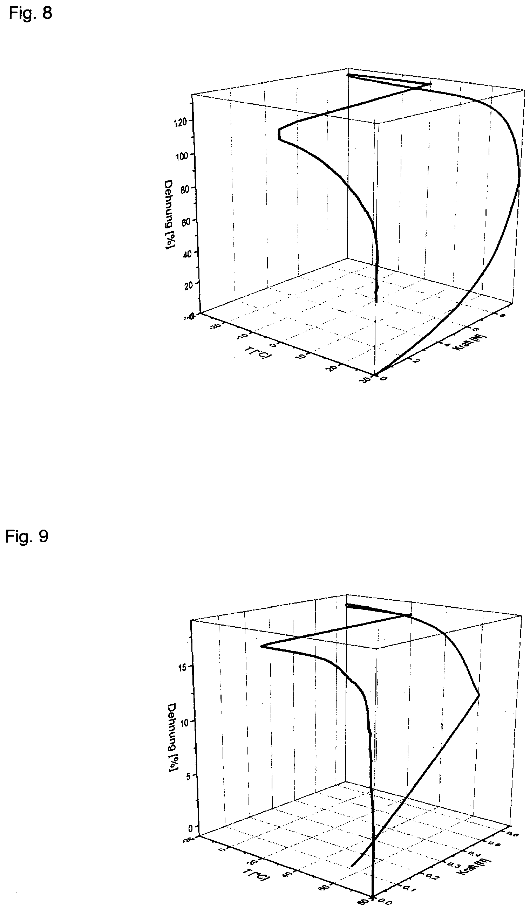

Der "Shape Memory"-Zyklus der so erhaltenen Folie konnte mittels dynamisch-mechanischer Analyse (Filmklemme) näher untersucht werden (Fig. 8):
1) Bei 30 °C wurde durch Krafterhöhung eine Dehnung induziert.
2) Beim Abkühlen kristallisierten die niedrigschmelzenden Kristallite, die als physikalische Vernetzungspunkte dienten, und fixierten die verstreckte Form. Diese blieb auch erhalten, nachdem die anliegende Kraft entfernt worden war.
3) Durch Heizen über Tₘ₁ wurden die reversiblen Vernetzungspunkte gelöst, wodurch eine Wiederherstellung der unverstreckten Form induziert wurde.

### Beispiel 5

Teilkristalline Homopolymere aus Polyhydroxyurethan, einerseits P4 (3,5 g), welches aus PolyTHF Amin (Jeffamine® THF-170, Huntsman) und 1,4-Butandioldiglycidylethercarbonat (BDGC) erhalten wurde, und andererseits P5 (3,5 g), welches aus dem Diamidodicarbonat Und₂DA-DC und 1,12-Diaminododecan (DAD) erhalten wurde, wurden in einem Doppelschnecken-Compounder bei 130 °C unter Stickstoffatmosphäre aufgeschmolzen und für eine Dauer von 5 Minuten durchmischt. Aus der Polymerschmelze wurde anschließend eine Folie durch Spritzgießen hergestellt.

Die eingesetzten difunktionellen cyclischen Carbonate sind nachstehend dargestellt:

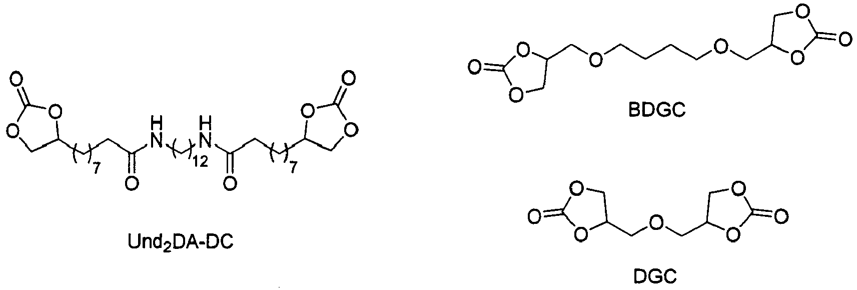

Folgende Materialeigenschaften wurden bestimmt:
P4: Mₙ = 16,7 kg/mol, Mw = 79,8 kg/mol, PDI = 4,8 (GPC; DMAc, PMMA Standard);
P5: Mₙ = 19,5 kg/mol, M_{w} = 36,3 kg/mol, PDI = 1,9 (GPC; DMAc, PMMA Standard);
Tₘ₁ = 21 °C; ΔHₘ₁ = 26 J/g; Tₘ₂ = 109 °C; ΔHₘ₂ = 4 J/g (DSC, zweite Aufheizkurve, 10 K/min).

Der "Shape Memory"-Zyklus des so erhaltenen Blends teilkristalliner Homopolymere konnte mittels dynamisch-mechanischer Analyse (Filmklemme) näher untersucht werden (Fig. 9):
1) Bei 80 °C (0,05 N Vorkraft) wurde durch Krafterhöhung eine Dehnung induziert.
2) Beim Abkühlen kristallisierten die niedrigschmelzenden Kristallite, die als physikalische Vernetzungspunkte dienten, und fixierten die verstreckte Form, die auch erhalten blieb, nachdem die anliegende Kraft entfernt worden war.
3) Durch Heizen über Tₘ₁ wurden die reversiblen Vernetzungspunkte gelöst, wodurch eine Wiederherstellung der unverstreckten Form induziert wurde.

### Beispiel 6

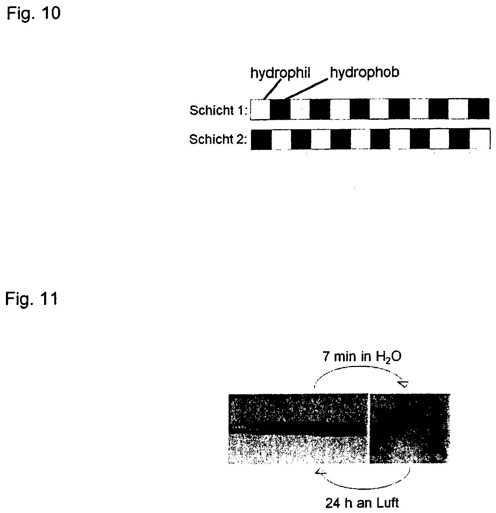

Zur Herstellung eines Mehrschichtsystems aus Polyhydroxyurethan wurde eine Vorlage ausgedruckt (Fig. 10) und unter eine auf 80 °C beheizte Glasplatte gelegt. Beim Anfertigen der ersten Schicht wurden die schwarzen Felder mit der Zusammensetzung für ein hydrophobes Polyhydroxyurethan gefüllt und anschließend die weißen Felder mit der Zusammensetzung für ein hydrophiles Polyhydroxyurethan. An den Grenzflächen der schwarzen und weißen Felder verliefen die Zusammensetzungen, wodurch es zu einer kovalenten Anbindung kam. Anschließend wurde auf analoge Weise die zweite Schicht über der ersten Schicht aufgebracht und im Ofen gehärtet.

Die Zusammensetzung für das hydrophobe Polyhydroxyurethan wurde wie folgt erhalten:
Carbonatisiertes Sojabohnenöl (CSO, 3,1 g) wurde im Ofen auf 80 °C erwärmt und anschließend mit Priamine™ 1074 (2,0 g) eine Minute lang homogenisiert.

Die Zusammensetzung für das hydrophobe Polyhydroxyurethan wurde in eine Spritze gefüllt und die schwarzen Felder der ersten Schicht wurden ausgefüllt.

Die Zusammensetzung für das hydrophile Polyhydroxyurethan wurde wie folgt erhalten:
Ethoxyliertes Trimethylolpropanglycidylethercarbonat (EO-TMPGC, 3,0 g) wurde im Ofen auf 80 °C erwärmt und anschließend mit 4,9-Dioxa-1,12-dodecandiamin (DODA, 0,65 g) eine Minute lang homogenisiert und weitere zehn Minuten lang bei 80 °C gelagert.

Die Zusammensetzung für das hydrophile Polyhydroxyurethan wurde in eine Spritze gefüllt und die weißen Felder der ersten Schicht wurden ausgefüllt, wobei durch Kontakt der Zusammensetzungen an den Grenzflächen der Quadrate eine kovalente Anbindung von hydrophiler und hydrophober Schicht erfolgte.

Die eingesetzten polyfunktionellen cyclischen Carbonate sind nachstehend dargestellt:

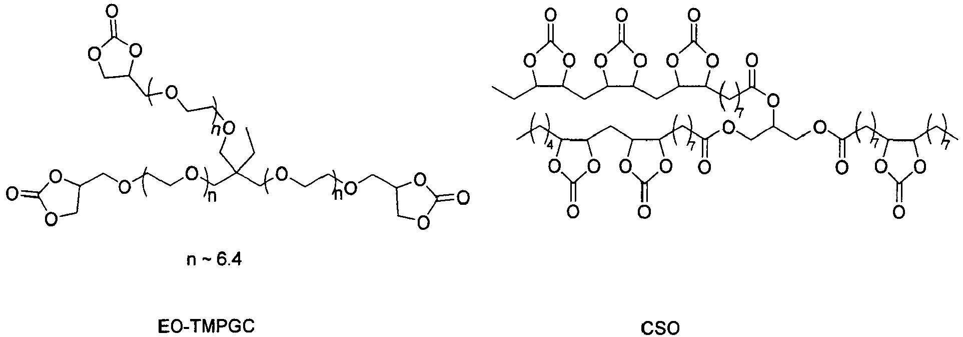

Die erste Schicht wurde für eine Dauer von 20 Minuten bei 80 °C angehärtet. Wie vorstehend erwähnt, wurde anschließend auf analoge Weise die zweite Schicht auf die erste Schicht aufgetragen. Anschließend wurde im Ofen für eine Dauer von 14 Stunden bei 80 °C und für eine Dauer von vier Stunden bei 100 °C gehärtet. Das so erhaltene Mehrschichtsystem wurde von der Glasplatte gelöst und nach Abkühlen auf Raumtemperatur in Wasser eingelegt. Die Formänderung wurde mit einer Kamera dokumentiert und war durch Lagerung an Luft umkehrbar (Fig. 11).

## Patentansprüche

1. Polymerzusammensetzung, umfassend ein lineares, verzweigtes und/oder vernetztes isocyanatfreies Polyhydroxyurethan mit teilkristallinen Eigenschaften, welches sich thermomechanisch programmieren und schalten lässt und auf einen externen Stimulus mit einer Formänderung reagiert, erhalten aus mindestens einem polyfunktionellen cyclischen Carbonat, dessen cyclische Carbonatgruppen fünf-, sechs-, sieben- und/oder achtgliedrig sind, als Komponente A1 und aus mindestens einem polyfunktionellen Amin als Komponente A2, wobei das mindestens eine polyfunktionelle cyclische Carbonat, das mindestens eine polyfunktionelle Amin und/oder die Kombination aus beiden hiervon kristallisationsfähig sind/ist und wobei das isocyanatfreie Polyhydroxyurethan folgende wiederkehrende Struktureinheit (A) aufweist: 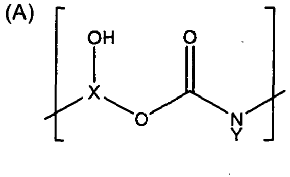 X ist ein linearer, verzweigter und/oder cyclischer, gesättigter oder ungesättigter, aliphatischer und/oder aromatischer, gegebenenfalls heteroatomhaltiger Kohlenwasserstoffrest mit mindestens zwei Kohlenstoffatomen und Y ist ein Wasserstoffatom oder eine Alkylgruppe, mit der Bedingung, dass sich die in der wiederkehrenden Struktureinheit (A) dargestellte Hydroxygruppe an einem Kohlenstoffatom in β-, γ-, δ- oder ε-Position in Bezug auf das Sauerstoffatom der Urethangruppe befindet.

2. Polymerzusammensetzung nach Anspruch 1, wobei das mindestens eine polyfunktionelle cyclische Carbonat glycidyletherbasiert ist und die cyclischen Carbonatgruppen jeweils fünfgliedrig sind und wobei das isocyanatfreie Polyhydroxyurethan mindestens eine der beiden folgenden wiederkehrenden Struktureinheiten (B) und (C) aufweist:

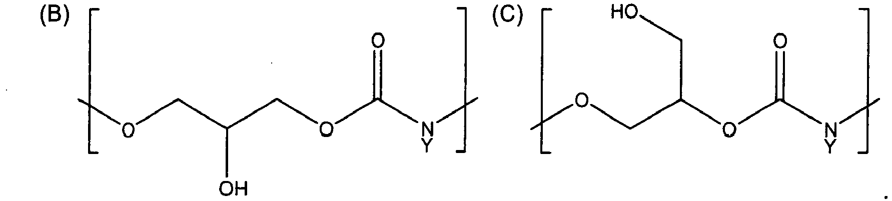

3. Polymerzusammensetzung nach Anspruch 1 oder 2, wobei Y ein Wasserstoffatom ist.

4. Polymerzusammensetzung nach einem der Ansprüche 1 bis 3, wobei das mindestens eine polyfunktionelle cyclische Carbonat und/oder das mindestens eine polyfunktionelle Amin kristallisationsfähige Seitengruppen aufweisen/aufweist.

5. Polymerzusammensetzung nach Anspruch 4, wobei das mindestens eine polyfunktionelle Amin ein verzweigtes, mit Aminogruppen terminiertes Polyethylenimin ist, welches durch Amidierung Fettsäureseitenketten mit Alkylresten, bestehend aus 15 bis 21 Kohlenstoffatomen, aufweist.

6. Polymerzusammensetzung nach einem der Ansprüche 1 bis 3, wobei das mindestens eine polyfunktionelle cyclische Carbonat und das mindestens eine polyfunktionelle Amin difunktionell sind und lineare, kristallisationsfähige Segmente bilden.

7. Polymerzusammensetzung nach Anspruch 6, wobei das difunktionelle Amin ein Diamin auf Polyetherbasis oder 1,12-Diaminododecan ist.

8. Polymerzusammensetzung nach einem der Ansprüche 1 bis 7, wobei der die Formänderung hervorrufende externe Stimulus eine Änderung der Temperatur oder eine Änderung der Feuchtigkeit ist.

9. Schichtsystem, umfassend mindestens eine Schicht, bestehend aus der Polymerzusammensetzung nach einem der Ansprüche 1 bis 8, und mindestens eine Schicht eines Polymers, welches sich nicht thermomechanisch programmieren und schalten lässt und welches nicht auf einen externen Stimulus mit einer Formänderung reagiert.

10. Verwendung der Polymerzusammensetzung nach einem der Ansprüche 1 bis 8 und Verwendung des Schichtsystems nach Anspruch 9 als Formkörper, Beschichtung, Faser, Folie, Aktuator oder Bauteil für die Medizintechnik.
